# EUROPÄISCHE PATENTANMELDUNG

(11) **EP 4 497 980 A1**
(43) Veröffentlichungstag der Anmeldung: **29.01.2025**
(21) Anmeldenummer: 23187317.5
(22) Anmeldetag: 24.07.2023
(51) Int. Cl.: F16K 31/10, F16K 31/524, F16K 31/56

(54) **AKTUATOREINHEIT ZUR STEUERUNG VON VENTILEN**

(71) Anmelder: maxon international ag, 6072 Sachseln (CH)
(72) Erfinder: Zimmermann, Kim, 6370 Stans (CH); Welter, Marcel, 6340 Baar (CH)
(74) Vertreter: Grünecker Patent- und Rechtsanwälte PartG mbB

(57) **Zusammenfassung**

Die vorliegende Erfindung betrifft eine Aktuatoreinheit (1) zur Steuerung von Ventilen, insbesondere zur Steuerung von hydraulischen Fahrradkomponentenventilen, mit einer Spule (2), einem von der Spule (2) in einer axialen Richtung (x) bewegbaren Antriebskörper (3), einem Stator (4) mit einem Indexmittel, einem vom Antriebskörper (3) bewegten Aktuator (5) mit einem Betätigungsmittel (18), einem Drehstellglied (6) mit einer Positionierkulisse (20) sowie einem mit dem Drehstellglied (6) gekoppelten Ventilglied (7) zum Steuern eines Ventils. Das Indexmittel des Stators (4) und das Betätigungsmittel (18) des Aktuators (5) stehen in Wirkbeziehung mit der Positionierkulisse (20) des Drehstellglieds (6). Dabei sind der Stator (4) und der Aktuator (5) zueinander bewegbar, insbesondere in der vom Antriebskörper vorgegebenen axialen Richtung, wobei das Indexmittel des Stators (4) und das Betätigungsmittel (18) des Aktuators (5) aus der gleichen axialen Richtung (x) auf die Positionierkulisse (20) des Drehstellglieds (6) einwirken. Darüber hinaus betrifft die Erfindung ein Steuerverfahren für ein solches Ventil.

## Beschreibung

Die vorliegende Erfindung betrifft eine Aktuatoreinheit zur Steuerung von Ventilen, insbesondere zur Steuerung von hydraulischen Fahrradkomponentenventilen, mit einer Spule, einem von der Spule in einer axialen Richtung bewegbaren Antriebskörper, einem Stator mit einem Indexmittel, einem Aktuator mit einem Betätigungsmittel, wobei der Antriebskörper auf den Aktuator wirkt, um den Aktuator in axialer Richtung zu bewegen, einem Drehstellglied mit einer Positionierkulisse sowie einem mit dem Drehstellglied gekoppelten Ventilglied zum Steuern eines Ventils, wobei das Indexmittel des Stators und das Betätigungsmittel des Aktuators in einer Wirkbeziehung mit der Positionierkulisse des Drehstellglieds stehen. Darüber hinaus betrifft die Erfindung ein Steuerverfahren für ein solches Ventil.

Im Stand der Technik sind verschiedenste Ausführungsformen von Hinterraddämpfern, Federgabeln und Sattelstützen für Fahrräder bekannt, deren Dämpfungsverhalten eingestellt oder gesteuert werden kann, um das Dämpfungsverhalten an unterschiedliche Bedingungen anzupassen. Neben einer unveränderbaren Grunddämpfung kann sowohl die Stärke der Dämpfung als auch das Dämpfungsverhalten eingestellt werden. Derartige Dämpfereinrichtungen für Fahrradkomponenten umfassen eine Federeinheit, um auftretende Stöße abzufedern, sowie die eigentliche Dämpfungseinheit, um die Federschwingung zu dämpfen. Dabei können die Dämpfereinrichtungen als integrale Einheit ausgebildet sein, aber auch aus separaten Federn und Dämpfungseinheiten kombiniert werden.

Dämpfungseinheiten für Fahrradkomponenten werden üblicherweise mit einem Hydraulikmittel als Dämpfungsfluid betrieben, das zur Dämpfung der Federschwingungen von einer ersten Dämpfungskammer über ein Ventil gedrosselt zu einer zweiten Dämpfungskammer geleitet wird. Dabei bestimmt die Größe der Ventilöffnung die Stärke der Dämpfung. Die optimale Dämpfung von Dämpfungseinrichtungen für Fahrräder hängt von verschiedenen Faktoren wie dem Gewicht des Fahrers und der Beschaffenheit des Geländes ab. Daher ist es für innovative Fahrradkomponenten erwünscht, die Stärke der Dämpfung in Abhängigkeit von der Last und dem Schwingungsverhalten einzustellen.

Zum Einstellen des Dämpfungs- und Schwingungsverhaltens von Dämpfungseinrichtungen sind vor allem mechanische Lösungen bekannt, es gibt aber auch unterschiedliche elektromechanische oder elektromagnetische Lösungen. Die Ansteuerung von elektromechanischen Ventilantrieben erfolgt meist durch rotative Motoren, beispielsweise DC-Motoren mit Getrieben oder Schrittmotoren, mit entsprechend langen Schaltzeiten. Elektromechanische Systeme sind entsprechend komplex und aufwändig bei der Herstellung und Montage, da neben dem Motor je nach System ein Encoder, ein Getriebe, ein Feststellmechanismus und/oder eine aktive Positionsüberwachung benötigt wird.

Eine elektromagnetische Ansteuerung eines Hydraulikventils für Fahrradkomponenten ist beispielsweise aus der DE 10 2011 009 405 A1 bekannt, bei der als Hydraulikmittel ein magnetorheologisches Fluid eingesetzt wird. Zur Dämpfung wird das Hydraulikmittel in dem Hydraulikventil zwischen den zwei Dämpfungskammern einem Magnetfeld mit einer einstellbaren Feldstärke ausgesetzt, um eine gewünschte Dämpfung zu erzielen, die an unterschiedliche Bedingungen anpassbar ist.

Weiter ist aus der Druckschrift DE 10 2016 206 358 A1 ein Ventil mit verschiedenen stabilen Ventilstellungen bekannt, bei dem ein Ventilkörper mittels einer elektromechanischen Betätigungseinrichtung relativ zu einem Grundkörper bewegbar und stabil in mehreren unterschiedlichen Schaltstellungen positionierbar ist. Dabei weist die Betätigungseinrichtung einen von einer elektrischen Spule angetriebenen Ventilkörper auf, der mittels einer Feder in einer geschlossenen Grundstellung gehalten wird, sowie einen Ringkörper mit einer Positionierstruktur, der drehbar in dem Ventilkörper aufgenommen ist, sowie einen Haltekörper mit ortsfest angeordneten Betätigungs- und Indexmittel zur Positionierung des Ringkörpers. Diese Betätigungseinrichtung ermöglicht zwar die Ausbildung eines multistabilen Hydraulikventils für Fahrradkomponenten, jedoch ist der Aufbau der Betätigungseinrichtung relativ komplex mit entsprechenden Kosten und hohem Montageaufwand sowie einem hohen Ausfallrisiko gerade bei den typischen Stö-ßen und Schlägen beim Einsatz in Fahrradkomponenten.

Der vorliegenden Erfindung liegt daher die Aufgabe zugrunde, eine Aktuatoreinheit zur Steuerung von Ventilen bereitzustellen, die sowohl einen technisch einfachen und kosteneffizienten Betrieb von Ventilen ermöglicht als auch mehrere stabile Schaltstellungen bei unterschiedlichen Umgebungsbedingungen ermöglicht.

Diese Aufgabe wird mit einer gattungsgemäßen Aktuatoreinheit dadurch gelöst, dass der Stator und der Aktuator zueinander bewegbar sind, insbesondere in der vom Antriebskörper vorgegebenen axialen Richtung, wobei das Indexmittel des Stators und das Betätigungsmittel des Aktuators aus der gleichen axialen Richtung auf die Positionierkulisse des Drehstellglieds einwirken. Dabei sind der Stator und das Drehstellglied mechanische Stator- und Rotorelemente der Aktuatoreinheit, die gemeinsam mit dem Aktuator das mit dem Drehstellglied gekoppelte Ventilglied zum Steuern eines Ventils betätigen. Dabei wird der Antriebskörper zum Betätigen des Aktuators bei einer elektrischen Anregung der Spule der Aktuatoreinheit in axialer Richtung bewegt. Der Antriebskörper wird auch als Schubrohr oder Hubanker der elektrisch betätigten Spule bezeichnet.

Während der Aktuator und das Drehstellglied sich in Bezug auf die übrigen Komponenten der Aktuatoreinheit bewegen, steht der Stator gegenüber der Spule und dem Gehäuse der Aktuatoreinheit still. Dabei kann der Stator auch als Teil des Gehäuses ausgebildet sein. Im Gegensatz zu dem in axialer Richtung bewegten Aktuator dreht sich das Drehstellglied mit seiner Positionierkulisse typischerweise in radialer Richtung um die axiale Längsachse der Aktuatoreinheit. Das Drehstellglied ist hierbei auch in axialer Richtung beweglich ausgeführt. Das mit dem Drehstellglied gekoppelte Ventilglied ist hierbei ein Bauteil, welches auf ein Ventil, bevorzugt ein Hydraulikventil, wirkt oder den Ventilkörper selbst ausbildet, um verschiedene Ventilstellungen des Ventils zu steuern. Bevorzugt sind in einer erfindungsgemäßen Aktuatoreinheit der Antriebskörper und der Aktuator miteinander verbunden oder einteilig ausgebildet, jedoch können der Antriebskörper und der Aktuator auch zwei frei zueinander bewegbare Teile sein, die an den Stirnseiten miteinander gekoppelt sind, beispielsweise mittels einer Federeinrichtung. Auch das Betätigungsmittel ist vorzugsweise mit dem Aktuator und/oder dem Antriebskörper einteilig ausgebildet oder verbunden. Mit einer solchen robusten und funktionssicheren Aktuatoreinheit können verschiedene Stellungen von Ventilen, insbesondere zur Steuerung von hydraulischen Fahrradkomponenten, mittels eines einfachen Dreh-Rast-Mechanismus, ähnlich einer Kugelschreibermechanik, gesteuert werden. Da in der vorliegenden Aktuatoreinheit das mit dem Drehstellglied gekoppelte Ventilglied im stromlosen Zustand der Spule sowohl axial als auch radial stabil positioniert ist, werden auch die verschiedenen Ventilstellungen der von der Aktuatoreinheit angesteuerten Ventile sicher in den jeweiligen Positionen gehalten, wodurch ein solches Ventilsystem mit einer erfindungsgemäßen Aktuatoreinheit robust und funktionssicher gegen Vibrationen und starke Schläge ist. Entsprechend ist die Aktuatoreinheit auch unter extremen Umgebungsbedingungen, wie sie beispielsweise beim Fahrradfahren auftreten, funktionssicher einsetzbar. Gegenüber herkömmlichen elektrischen oder mechanisch betätigten Steuereinheiten für Ventile weist die erfindungsgemäße Aktuatoreinheit eine einfache und funktionssichere Konstruktion auf, ist kostengünstig in der Herstellung und ist im stromlosen Zustand in allen Positionen, sowohl linear wie auch rotativ, stabil, wodurch keine Zufuhr einer Positionshalteenergie notwendig ist.

Eine geeignete Ausführungsform sieht vor, dass der Stator ein Führungsmittel aufweist, um den Aktuator und/oder den Antriebskörper in axialer Richtung zu führen, bevorzugt mindestens eine in axialer Richtung verlaufende Nut oder mindestens einen in axialer Richtung verlaufenden Schlitz. Dies erlaubt eine definierte Bewegung des Aktuators in Richtung des Drehstellglieds. Das Führungsmittel am Stator bewirkt, dass der in axialer Richtung geführte Aktuator sich nicht relativ zum Stator drehen kann. Bei einer hohlzylindrischen Ausführung des Stators kann der Aktuator über entsprechend in axialer Richtung verlaufende Nuten oder Schlitze am Innenumfang des Stators geführt werden.

Zweckmäßigerweise kann das Betätigungsmittel des Aktuators eine abgeschrägte Betätigungsmittelstirnseite aufweisen, die mit der Positionierkulisse des Drehstellglieds in Eingriff bringbar ist, um das Drehstellglied um die Längsachse zu drehen. Dabei ist eine axiale Führung des Aktuators von Vorteil, um eine Abstützung für die mit der Positionierkulisse des Drehstellglieds in Eingriff bringbare abgeschrägte Stirnseite des Betätigungsmittels zu ermöglichen. Weiter weist der Aktuator bevorzugt zwei oder mehr Betätigungsmittel auf, die gleichmäßig auf verschiedenen Seiten oder am Umfang des Aktuators verteilt sind. Das Betätigungsmittel des Aktuators mit abgeschrägter Stirnseite ermöglicht eine einfache Konstruktion eines Dreh-Rast-Mechanismus zum Drehen des Drehstellglieds und damit zum Einstellen von stabilen axialen und rotativen Positionen des Ventilglieds.

Ferner kann das Betätigungsmittel des Aktuators als ein Kreisringsektor ausgestaltet sein, wobei der Bogen des Kreisringsektors des Betätigungsmittels kleiner ist als ein Bogen eines Kreisringsektors einer Positionierstruktur an der Positionierkulisse des Drehstellglieds. Damit ist das Betätigungsmittel weniger breit als die Positionierstruktur. Dies ermöglicht, dass das Indexmittel des Stators zuverlässig mit der Positionierstruktur an der Positionierkulisse des Drehstellglieds in Kontakt gebracht werden kann.

Dabei kann die Spitze der abgeschrägten Stirnseite des Betätigungsmittels zumindest teilweise abgeflacht sein. Dadurch lässt sich der Abrieb an der abgeschrägten Stirnseite des Betätigungsmittels reduzieren, da ein geringerer Anpressdruck gegenüber der Positionierkulisse des Drehstellglieds besteht. Durch den geringeren Anpressdruck wird auch eine Einkerbung der Spitze der abgeschrägten Stirnseite des Betätigungsmittels an der Positionierkulisse des Drehstellglieds vermieden.

In einer weiteren Ausgestaltung ist vorgesehen, dass die abgeschrägte Betätigungsmittelstirnseite eine Schräge aufweist, welche der Schräge der Positionierstierseite der Positionierkulisse und/oder der Schräge der Indexzeigerstirnseite des Indexmittels des Stators entspricht. Dadurch entstehen gegenseitig flächige Auflagen der Betätigungsmittelstirnseite und/oder der Indexzeigerstirnseite gegenüber der Positionierstierseite der Positionierkulisse. Dies reduziert den lokalen Anpressdruck, wodurch zwischen den Stirnseiten, weniger Abrieb oder Einkerbungen entstehen.

In einer bevorzugten Ausgestaltung ist die Positionierstirnseite der Positionierkulisse des Drehstellglieds zumindest teilweise konvex gewölbt. Durch eine zumindest teilweise leichte konvexe Wölbung, kann verhindert werden, dass die Spitze der abgeschrägten Stirnseite der Betätigungsmittelstirnseite oder die Spitze der Indexzeigerstirnseite auf der Positionierstirnseite aufschlägt und dadurch ein Abrieb bzw. eine Beschädigung der Spitze verursacht wird. Bei einer konvex bzw. nach unten zur Positionierkulisse gewölbten Positionierstirnseite liegt die abgeschrägte Betätigungsmittelstirnseite oder die abgeschrägte Indexzeigerstirnseite auf der Positionierstirnseite auf, ohne dass beim Aufschlag oder in einer Ruheposition die Spitze der abgeschrägten Betätigungsmittelstirnseite oder die Spitze der Indexzeigerstirnseite mit der Positionierstirnseite der Positionierkulisse in Kontakt ist.

Eine weitere Ausgestaltung sieht vor, dass das Indexmittel des Stators mindestens ein in axialer Richtung vorstehender Indexzeiger ist, und dass der Indexzeiger bevorzugt eine abgeschrägte Indexzeigerstirnseite aufweist. Ein in axialer Richtung vorstehendes Indexmittel des Stators ist eine einfache Lösung für die notwendige Wirkbeziehung zwischen dem Stator und der Positionskulisse des Drehstellglieds, um diesen in einer bestimmten Position festzulegen. Dabei können bevorzugt auch zwei oder mehrere Indexmittel vorgesehen sein, die gleichmäßig am Umfang oder auf verschiedenen Seiten des Stators angeordnet sind. Eine abgeschrägte Indexzeigerstirnseite des vorstehenden Indexzeigers ermöglicht eine Weiterführung der von einem Betätigungsmittel angeregten Drehbewegung des Drehstellglieds. Bevorzugt ist die Indexzeigerstirnseite derart abgeschrägt, so dass ein flaches oder stumpfes Stirnseitenende axial vorsteht. Hierdurch kann ein möglicher Abrieb oder ein Abbrechen der vorstehenden Indexzeigerspitze verhindert werden.

Eine nützliche Ausbildung sieht vor, dass das Betätigungsmittel des Aktuators und/oder das Indexmittel des Stators ausschließlich in axialer Richtung vorstehen. Dies ermöglicht sowohl eine einfache Montage der Aktuatoreinheit als auch die einfache Herstellung des Aktuators und des Stators. Die ausschließlich in axialer Richtung vorstehende Ausgestaltung des Betätigungsmittels und des Indexmittels bezieht sich jeweils auf die zugehörigen Grundkörper des Aktuators und des Stators, wobei das Betätigungsmittel des Aktuators und das Indexmittel des Stators jeweils keine gegenüber den Grundkörpern seitlich oder radial vorstehenden Anteile aufweisen. Weiter ermöglichen die ausschließlich in axialer Richtung vorstehenden Betätigungsmittel und/oder Indexmittel eine sichere Wirkbeziehung mit der Positionierkulisse des Drehstellglieds und damit eine sichere Funktion der Aktuatoreinheit.

Sinnvollerweise kann die Positionierkulisse des Drehstellglieds in Richtung des Stators und des Aktuators vorstehen, entsprechend einer der Betätigungsrichtung des Aktuators entgegengesetzten Richtung, wobei die Positionierkulisse bevorzugt ringförmig ausgebildet ist. Entsprechend steht die Positionierkulisse von einem typischerweise runden Grundkörper des Drehstellglieds in Richtung der Stirnseiten des Betätigungsmittels des Aktuators und des Indexmittels des Stators vor, wobei auch hier die Positionierkulisse keinen radialen Anteil aufweist, der in Bezug auf den Grundkörper des Drehstellglieds seitlich oder radial absteht. Dies ermöglicht sowohl einen einfachen Aufbau als auch eine einfache Herstellung des Drehstellglieds der erfindungsgemäßen Aktuatoreinheit, wobei das Drehstellglied auf einer der Positionierkulisse abgewandten Stirnseite des Grundkörpers eine einschränkungsfreie Kopplung mit dem Ventilglied zum Steuern des Ventils ermöglicht.

Eine besondere Alternative sieht vor, dass die Positionierkulisse mehrere in axialer Richtung vorstehende Positionierstrukturen aufweist, wobei die unterschiedlichen Positionierstrukturen optional zumindest teilweise eine abgeschrägte Positionierstirnseite aufweisen. Hierdurch wird eine Interaktion mit den abgeschrägten Stirnseiten des Betätigungsmittels und/oder des Indexmittels ermöglicht, um das Drehstellglied zu drehen. Die Positionierkulisse umfasst entsprechend mindestens zwei, bevorzugt mindestens drei unterschiedliche Positionierstrukturen, die unterschiedlich weit in axialer Richtung gegenüber einem Grundkörper des Drehstellglieds vorstehen und verschiedene stabile Haltepositionen und Betätigungsbereiche mit abgeschrägten Stirnseiten zum radialen Antrieb des Drehstellglieds definieren. Die unterschiedlichen Positionierstrukturen der Positionierkulisse ermöglichen einen sicheren Bewegungsablauf des Ventilglieds beim Umschalten zwischen aufeinander folgenden Schaltstellungen. Die Haltepositionen der einzelnen Schaltstellungen sind dabei sowohl axial als auch rotativ unterschiedlich, wodurch das Ventilglied durch die axiale und/oder die rotative Position des Drehstellglieds gesteuert werden kann. Weiter können dabei mehrere Sätze von nebeneinander angeordneten unterschiedlichen Positionierstrukturen vorgesehen sein, wobei die Reihenfolge der Positionierstrukturen sich am Umfang des Drehstellglieds wiederholt. Die Anordnung mehrerer gleicher Sätze von Positionierstrukturen am Umfang eines Grundkörpers des Drehstellglieds erlaubt eine gleichmäßige und kontinuierliche Umschaltbewegung auch beim Übergang zwischen einzelnen Positionierstrukturen. Dabei sind die zwei oder mehr Sätze von Positionierstrukturen in ihrer Formgebung so aufeinander abgestimmt, dass das Ventilglied bei einer Betätigung der Aktuatoreinheit sich wiederholende Abfolgen von Bewegungszyklen durchläuft, sodass die unterschiedlichen Haltepositionen in der gleichen Reihenfolge fortlaufend und unterbrechungsfrei durchschaltbar sind.

In einer weiteren alternativen Ausführungsform umfasst die Positionierkulisse mindestens zwei, bevorzugt mindestens drei gleichförmige Positionierstrukturen, die gleichweit in axialer Richtung gegenüber einem Grundkörper des Drehstellglieds vorstehen und verschiedene stabile Haltepositionen und Betätigungsbereiche mit abgeschrägten Stirnseiten zum radialen Antrieb des Drehstellglieds definieren. Hierdurch wird beim Übergang zwischen zwei einzelnen Positionierstrukturen immer eine gleichförmige axiale Bewegung erzeugt und die Haltepositionen in einzelnen Schaltstellungen liegen axial auf derselben Position, so dass das Ventilglied ausschließlich durch die rotative Bewegung des Drehstellglieds gesteuert wird.

In einer vorteilhaften Ausführung sind die axial vorstehenden Positionierstrukturen der Positionierkulisse des Drehstellglieds in Umfangsrichtung breiter ausgeführt als das Betätigungsmittel des Aktuators.

Für eine besonders einfache Konstruktion und kostengünstige Herstellung können das Drehstellglied und das Ventilglied fest miteinander verbunden oder einteilig ausgebildet sein. Dies ermöglicht eine sichere Funktion der Aktuatoreinheit und eine sichere Ansteuerung der verschiedenen Haltepositionen des Ventils.

Eine besondere Ausführung einer erfindungsgemäßen Aktuatoreinheit sieht vor, dass das Drehstellglied in axialer Richtung gegenüber dem Stator vorgespannt ist, wobei bevorzugt eine Federeinrichtung zum Vorspannen des Drehstellglieds vorgesehen ist, die sich gegen ein Gehäuse abstützt, um das Drehstellglied in axialer Richtung vorzuspannen. Dabei sind üblicherweise das Drehstellglied und das damit gekoppelte Ventilglied gemeinsam vorgespannt, insbesondere mit einer axialen Vorspannung in Richtung des Stators. Die Federeinrichtung, üblicherweise eine sich gegen ein Gehäuse abstützende Schraubenfeder, ermöglicht nicht nur eine Rückstellung des Ventilglieds aus einer vorgeschobenen Position, sondern ermöglicht auch die Fortführung der Drehbewegung des Drehstellglieds über die abgeschrägten Stirnseiten der in axialer Richtung vorstehenden Indexzeiger mittels der teilweise abgeschrägten Stirnseiten der in axialer Richtung vorstehenden Positionierstrukturen. Für einen funktionssicheren Aufbau und Betrieb der Aktuatoreinheit kann die Spule eine Solenoid-Spule sein und der Antriebskörper kann bevorzugt ein permanentmagnetischer Hubanker sein, der in axialer Richtung zumindest zum Teil in der Spule aufgenommen ist. Dies ermöglicht eine sichere Bewegung des Antriebskörpers bzw. des Hubankers oder des Schubrohrs der Spule in axialer Richtung. Alternativ kann der Antriebskörper auch als ein weichmagnetischer Hubkern ausgebildet sein, wobei dann zum Zurückbewegen des Hubkerns ein weiteres Federelement eingesetzt werden kann. Auch zum Zurückbewegen des permanentmagnetischen Hubankers kann ein zusätzliches Federelement eingesetzt werden.

In einer bevorzugten Konstruktion der Aktuatoreinheit kann ein Gehäuse vorgesehen sein, wobei der Stator, der Aktuator, das Drehstellglied und optional eine Federeinrichtung zum Vorspannen des Drehstellglieds sowie zumindest teilweise das Ventilglied in dem Gehäuse aufgenommen sind. Das Gehäuse und die Anordnung der verschiedenen Komponenten der Aktuatoreinheit innerhalb des Gehäuses sowie eine Einbindung der Spule ermöglicht einen sicheren Schutz der verschiedenen Bauteile auch bei rauen und belastenden Umgebungsbedingungen. Weiterhin ermöglicht eine mit einem Gehäuse versehene Aktuatoreinheit eine einfache Integration in entsprechende Fahrradkomponenten.

In einer nützlichen Ausbildung kann die Aktuatoreinheit eine Fahrradkomponenten-Aktuatoreinheit zur Steuerung von hydraulischen Fahrradkomponenten, beispielsweise von Federgabeln, Dämpfern oder Sattelstützen, sein. Eine solche Fahrradkomponenten-Aktuatoreinheit ermöglicht eine einfache Integration und Montage in hydraulischen Fahrradkomponenten, eine einfache Wartung und einen einfachen Austausch von Komponenten. Die erfindungsgemäße Aktuatoreinheit ist in ihrer besonders robusten und funktionssicheren Ausgestaltung besonders gut für den anspruchsvollen Einsatz und die rauen Umgebungsbedingungen beim Fahrradfahren geeignet.

Weiterhin bezieht sich die Erfindung auf ein Steuerverfahren für ein Ventil, insbesondere für ein Hydraulikventil zur Steuerung von hydraulischen Fahrradkomponenten, beispielsweise von Federgabeln, Dämpfern oder Sattelstützen, mit einer der oben beschriebenen Aktuatoreinheiten. Dabei umfasst das Steuerverfahren das Beaufschlagen der Spule mit Strom, das Antreiben des Antriebskörpers durch die mit Strom beaufschlagte Spule in axialer Richtung, d. h. in Richtung des Drehstellglieds, das Bewegen des Aktuators in axialer Richtung mittels des Antriebskörpers, wodurch das Betätigungsmittel des Aktuators das Drehstellglied über eine Positionierkulisse aus einer ersten stabilen Halteposition in eine gegenüber dem Indexmittel verstellbare Drehposition überführt, das Überführen der Spule in einen stromlosen Zustand, das Drehen des Drehstellglieds gegenüber dem Stator, bevorzugt indem eine abgeschrägte Positionierstirnseite einer Positionierstruktur der vorgespannten Positionierkulisse des Drehstellglieds an einer abgeschrägten Stirnseite des Indexmittels entlanggleitet, und das Festlegen des Drehstellglieds in einer zweiten stabilen Halteposition mittels des Eingriffs des Indexmittels des Stators in die Positionierkulisse des vorgespannten Drehstellglieds. Dieses Steuerverfahren erlaubt nicht nur eine sichere Ventilfunktion und ein sicheres Umschalten des Ventils zwischen verschiedenen Ventilpositionen, sondern auch die schnelle Betätigung des Ventils und wiederholtes Umschalten zwischen verschiedenen Haltepositionen. Dabei wird das Ventilglied in der Aktuatoreinheit im stromlosen Zustand sowohl axial als auch radial stabil gehalten, was entsprechend auch zu einer stabilen Schaltstellung des Ventils führt.

Im Folgenden wird eine nicht einschränkende Ausführungsform der vorliegenden Erfindung anhand von beispielhaften Zeichnungen näher erläutert. Es zeigen:
- Figur 1: eine teilweise frei geschnittene perspektivische Ansicht einer erfindungsgemäßen Aktuatoreinheit,
- Figur 2: eine teilweise frei geschnittene perspektivische Ansicht der Aktuatoreinheit aus Figur 1 in einer ersten Halteposition,
- Figur 3: eine teilweise frei geschnittene perspektivische Ansicht der Aktuatoreinheit aus Figur 2 in einer ersten Halteposition mit einem vorgeschobenen Aktuator,
- Figur 4: eine teilweise frei geschnittene perspektivische Ansicht der Aktuatoreinheit aus Figur 3 in einer vorgeschobenen Drehposition,
- Figur 5: eine teilweise frei geschnittene perspektivische Ansicht der Aktuatoreinheit aus Figur 4 während einer Drehbewegung des Drehstellglieds entlang der abgeschrägten Stirnseite des Indexmittels,
- Figur 6: eine teilweise frei geschnittene perspektivische Ansicht der Aktuatoreinheit aus Figur 5 mit einem in eine zweite Halteposition einrückenden Indexmittel,
- Figur 7: eine teilweise frei geschnittene perspektivische Ansicht einer weiteren erfindungsgemäßen Aktuatoreinheit, und
- Figur 8: eine perspektivische Ansicht des Drehstellglieds und des Ventilglieds der Aktuatoreinheit aus Figur 7.

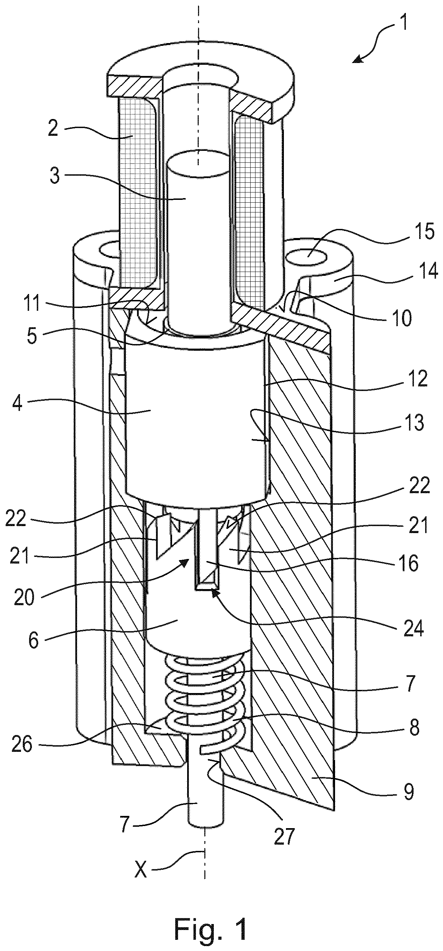

Figur 1 zeigt eine Ausführungsform einer erfindungsgemäßen Aktuatoreinheit 1 zum Steuern von Ventilen (nicht gezeigt), insbesondere von Hydraulikventilen, in einer teilweise frei geschnittenen perspektivischen Ansicht. Die Aktuatoreinheit 1 weist eine Spule 2, insbesondere eine Solenoid-Spule, einen von der Spule 2 in einer axialen Richtung x bewegbaren Antriebskörper 3, einen Stator 4, einem Aktuator 5, der von dem Antriebskörper 3 bewegt wird, ein federvorgespanntes Drehstellglied 6 und ein Ventilglied 7 zum Steuern des Ventils bzw. der Position eines Ventilkörpers. Dabei sind der Stator 4, der Aktuator 5, das Drehstellglied 6, eine Schraubenfeder 8 zum Vorspannen des Drehstellglieds 6 und zum Teil das Ventilglied 7 innerhalb eines Gehäuses 9 angeordnet und im Wesentlichen koaxial zur Längsrichtung des Gehäuses 9 in axialer Richtung x angeordnet und bis auf den relativ zum Gehäuse fixierten Stator 4 in dieser Längsrichtung bewegbar. Die hohlzylindrische Spule 2 ist an der Stirnseite 10 des Gehäuses 9 angeordnet, wobei sich der in der Spule 2 in axialer Richtung x geführte Antriebskörper 3 in das Gehäuse 9 hinein erstreckt und dort in axialer Richtung x auf den innerhalb des Stators 4 geführten Aktuator 5 wirkt.

Sobald die hohlzylinderförmig ausgebildete Spule 2 von einem elektrischen Strom zur Erzeugung eines Magnetfeldes angeregt wird, wird der auch als Schubrohr oder Hubanker der Spule 2 bezeichnete Antriebskörper 3 in axialer Richtung x bewegt. Der Antriebskörper 3 kann als ein Permanentmagnet oder alternativ als ein weichmagnetischer Hubkern ausgebildet sein. Der Stator 4 weist mittig eine Bohrung 11 auf, in der der Aktuator 5 aufgenommen und in einer in axialer Richtung x an der Wandung der Bohrung 11 vorgesehenen Nut oder einem dort vorgesehenen Schlitz (nicht gezeigt) geführt ist. In der Bohrung 11 ist weiter der von der Spule 2 bewegte Antriebskörper 3 aufnehmbar. Bei einer Anregung der Spule 2 bewegt sich der Antriebskörper 3 aus der hohlzylindrischen Spule 2 in die Bohrung 11 des Stators 4 hinein und schiebt den mit dem Antriebskörper 3 gekoppelten oder gegenüber dem Antriebskörper 3 vorgespannten Aktuator 5 in axialer Richtung x auf der gegenüberliegenden Seite des Stators 4 aus der Bohrung 11 hinaus.

Der Stator 4 weist am Außenumfang zwei abgeflachte Seiten 12 auf, die in entsprechenden Ausnehmungen 13 innerhalb des Gehäuses 9 angeordnet werden können, um den Stator 4 rotativ gegenüber dem Gehäuse 9 zu sichern. Die axiale Sicherung des Stators 4 erfolgt dann über den Deckel 14 des Gehäuses 9, der über entsprechende Befestigungsöffnungen 15 am Gehäuse 9 festgelegt wird. Der Stator 4 weist mindestens ein Indexmittel oder Indexzeiger 16 auf, bevorzugt zwei am Umfang des Stators 4 um 180° versetzt angeordnete Indexzeiger 16, die an der Unterseite des Stators 4 in axialer Richtung x vorstehen und eine abgeschrägte Indexzeigerstirnseite 17 aufweisen.

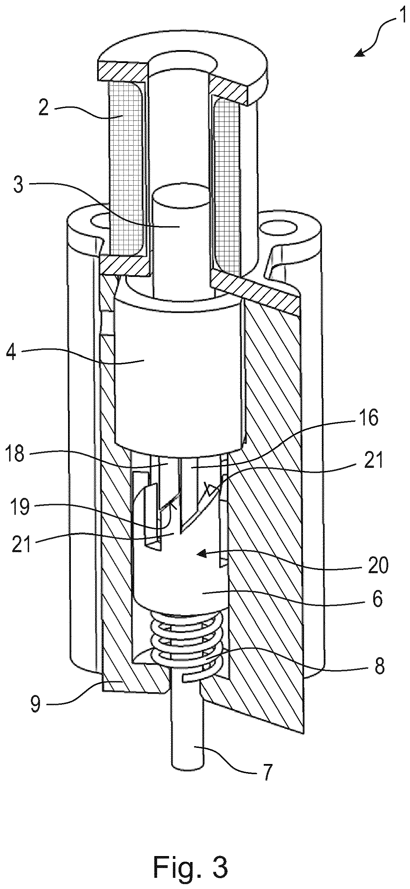

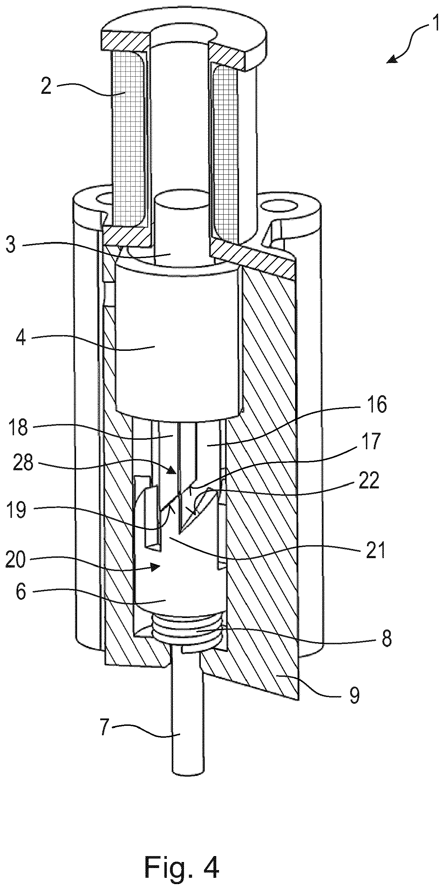

Der in der Bohrung 11 des Stators 4 angeordnete Aktuator 5 weist auf einer dem Antriebskörper 3 abgewandten Unterseite des Aktuators 5 mindestens ein in axialer Richtung x vorstehendes Betätigungsmittel 18 auf, bevorzugt zwei gleichmäßig am Umfang des Aktuators 5 angeordnete Betätigungsmittel 18, mit jeweils einer abgeschrägten Betätigungsmittelstirnseite 19, siehe auch Figur 3 und 4.

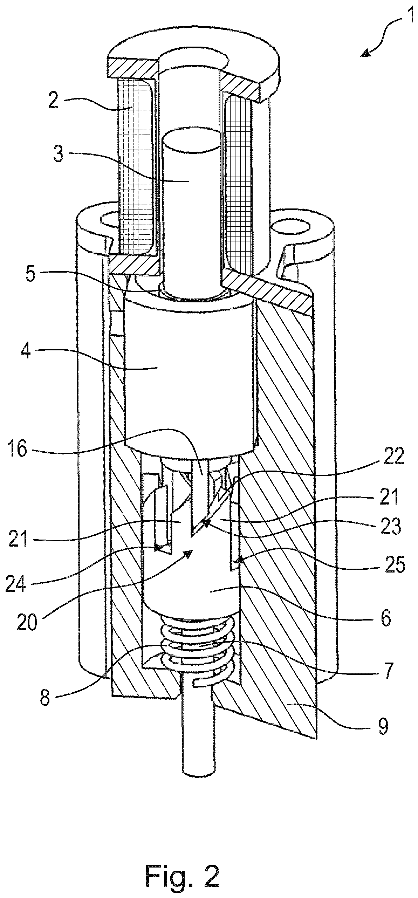

Das Drehstellglied 6 weist auf der dem Stator 4 und dem Aktuator 5 zugewandten Oberseite eine Positionierkulisse 20 auf. Die Positionierkulisse 20 besteht aus mehreren nebeneinander angeordneten Positionierstrukturen 21, die unterschiedlich weit in axialer Richtung x von der Oberseite des Drehstellglieds 6 in Richtung des Stators 4 und des Aktuators 5 vorstehen und jeweils abgeschrägte oder gerade Positionierstirnseiten 22 aufweisen. Dabei kann sich die Reihenfolge der unterschiedlichen Positionierstrukturen 21 am Umfang des Drehstellglieds 6 wiederholen und dadurch mehrere kontinuierlich aufeinander folgende Betätigungsvorgänge der Aktuatoreinheit 1 ermöglichen. Die Positionierstrukturen 21 sind dabei für die Interaktion mit dem Indexzeiger 16 des Stators 4 und dem Betätigungsmittel 18 des Aktuators 5 ausgebildet, wobei die Positionierstrukturen 21 verschiedene Haltepositionen 23-25 ausbilden, in denen das von der Schraubenfeder 8 vorgespannte Drehstellglied 6 über die Indexzeiger 16 des Stators 4 sowohl axial als auch rotativ festgelegt ist, siehe auch Figur 2. Der Indexzeiger 16 des Stators 4 wird in Figur 1 über die Vorspannung der Schraubenfeder 8 in die zweiten Halteposition 24 der Positionierstruktur 21 des Drehstellglieds 6 gedrückt und auch bei stromloser Spule 2 gehalten. Dazu stützt sich die Schraubenfeder 8 am Boden 26 des Gehäuses 9 ab. Das mit dem Drehstellglied 6 gekoppelte Ventilglied 7 erstreckt sich durch die Schraubenfeder 8 hindurch und tritt durch eine Öffnung 27 am Boden 26 des Gehäuses 9 aus, um direkt in einem zugeordneten Ventil (nicht gezeigt) oder über einen Ventilkörper (nicht gezeigt) die Öffnungsstellung des Ventils gemäß den verschiedenen Halteposition 23-25 stromlos zu halten.

Die Positionierung des Drehstellglieds 6 in einer ersten Halteposition 23 zeigt die in Figur 2 dargestellte Aktuatoreinheit 1. Das von der Schraubenfeder 8 vorgespannte Drehstellglied 6 wird mit der Positionierkulisse 20 gegen den Indexzeiger 16 des Stators 4 gedrückt, wobei hier die abgeschrägten Positionierstirnseiten 22 der Positionierstrukturen 21 mit der abgeschrägten Indexzeigerstirnseite 17 des Indexzeigers 16 zusammenwirken, um die Positionierkulisse 20 gegen den in axialer Richtung x weiter vorstehenden Indexzeiger 16 in axialer und rotativer Richtung festzulegen. In dieser als erste Halteposition 23 bezeichneten Lage des Drehstellglieds 6 ist das Ventilglied 7 bei einer nicht angeregten Spule 2 am weitesten aus der Öffnung 27 des Gehäuses 9 nach unten vorstehend. Neben dieser ersten Halteposition 23 sind an der Positionierkulisse 20 auch die zweite Halteposition 24, in der der Indexzeiger 16 zwischen den senkrechten Flanken zweier Positionierstrukturen 21 angeordnet ist und das Ventilglied 7 gemäß der Figur 1 in einer mittleren Position aus der Öffnung 27 des Gehäuses 9 vorsteht, sowie die dritte Halteposition 25 zu erkennen, in der Indexzeiger 16 wiederum zwischen den senkrechten Flanken zweier Positionierstrukturen 21 aufgenommen ist und das Ventilglied 7 am geringsten aus der Öffnung 27 des Gehäuses 9 vorsteht.

Im Folgenden wird die Funktionsweise einer erfindungsgemäßen Aktuatoreinheit zur Steuerung von Ventilen anhand der Figuren 2-6 näher erläutert:
Ausgehend von der in Figur 2 gezeigten Stellung der Aktuatoreinheit 1 in der ersten Halteposition 23 bei einer nicht angeregten Spule 2 wird gemäß der Figur 3 bei einer mit elektrischem Strom angeregten Spule 2 der Antriebskörper 3 über das von der Spule 2 erzeugte Magnetfeld aus dem zylindrischen Hohlraum der Spule 2 durch den Deckel 14 des Gehäuses 9 in die Bohrung 11 des Stators 4 hineinbewegt und schiebt auf der Unterseite des Stators 4 den Aktuator 5 aus der Bohrung 11 in Richtung des Drehstellglieds 6. Beim Auftreffen der abgeschrägten Betätigungsmittelstirnseite 19 des Betätigungsmittels 18 des Aktuators 5 auf die abgeschrägte Positionierstirnseite 22 der Positionierstrukturen 21 der Positionierkulisse 20 wird der Indexzeiger 16 aus der ersten Halteposition 23 abgehoben, wobei das Drehstellglied 6 von dem Aktuator 5 zunächst ohne rotativen Anteil lediglich in axialer Richtung x bewegt wird, da die abgeschrägte Betätigungsmittelstirnseite 19 über die abgeschrägte Positionierstirnseite 22 die Positionierstruktur 21 die senkrechten Flanke der Positionierstruktur 21 gegen den festgelegten Indexzeiger 16 des Stators 4 drückt und eine Drehung des Drehstellglieds 6 verhindert.

Beim weiteren Einfahren des über die angelegte Spule 2 in axialer Richtung x bewegten Antriebskörpers 3 in die Bohrung 11 des Stators 4 wird, wie in Figur 4 gezeigt, der Aktuator 5 weiter in Richtung des Drehstellglieds 6 aus der Bohrung 11 herausgeschoben und drückt über das Drehstellglied 6 die Schraubenfeder 8 zusammen und schiebt gleichfalls das Ventilglied 7 in eine über die erste Halteposition 23 hinaus vorstehende Lage aus der Öffnung 27 am Boden 26 des Gehäuses 9 heraus. Gleichzeitig wird das Drehstellglied 6 in dieser Drehposition 28 nicht mehr in seiner radialen Position fixiert, da der Indexzeiger 16 und die senkrechte Flanke der zugehörige Positionierstruktur 21 sich senkrecht zur axialen Richtung x nicht mehr überschneiden, d. h. sich nicht mehr an den zugehörigen Seitenflanken berühren. In dieser Drehposition 28 des Drehstellglieds 6 ist das Drehstellglied 6 zusammen mit der Positionierkulisse 20 gegenüber dem Stator 4 und dem zugehörigen Indexzeiger 16 drehbar.

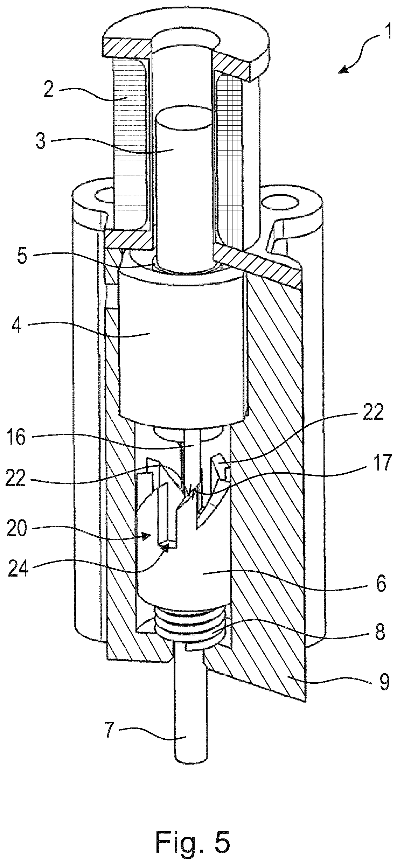

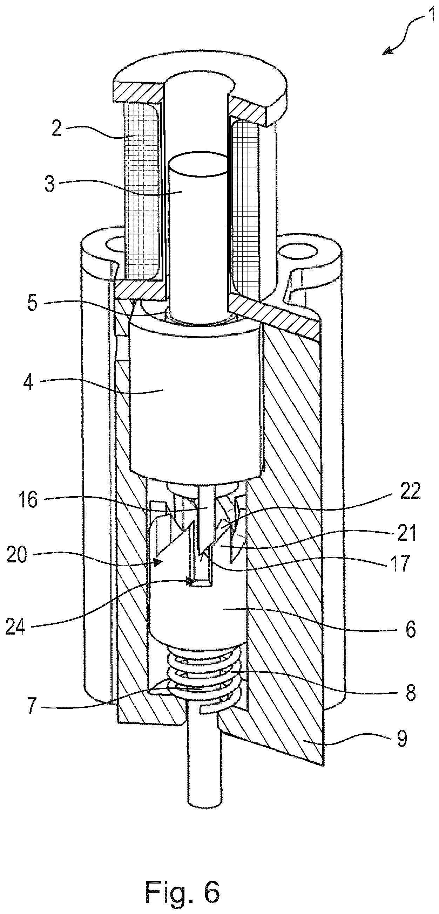

Da in der Drehposition 28 des Drehstellglieds 6 die von der Positionierkulisse 20 vorstehende Positionierstruktur 21 mit der abgeschrägten Positionierstirnseite 22 jedoch an der ebenfalls abgeschrägten Betätigungsmittelstirnseite 19 anliegt, aber seitlich nicht mehr durch die Seitenflanke des Indexzeigers 16 geführt ist, gleitet oder schiebt sich die abgeschrägte Positionierstirnseite 22 durch die Vorspannung der zusammengedrückten Schraubenfeder 8 auch ein wenig in radialer Richtung über die abgeschrägte Betätigungsmittelstirnseite 19, siehe Figur 4. Beim Ausschalten der elektrischen Anregung der Spule 2 und dem damit verbundenen Zurückziehen des Antriebskörpers 3 und des damit gekoppelten Aktuators 5, siehe Figur 5, trifft die abgeschrägte Positionierstirnseite 22 der vorstehenden Positionierstruktur 21 zumindest zum Teil auf die abgeschrägte Indexzeigerstirnseite 17 und gleitet dann durch die Vorspannung der Schraubenfeder 8 an dieser entlang, bis der Indexzeiger 16 sich in die zweite Halteposition 24 zwischen den Seitenflanken der nachfolgenden Positionierstrukturen 21 bewegt, siehe Figur 6.

Anschließend rückt der Indexzeiger 16 vollständig in die zweite Halteposition 24 ein, siehe Figur 1, wobei der Indexzeiger 16 das vorgespannte Drehstellglied 6 zwischen den Seitenflanken der angrenzenden Positionierstrukturen 21 axial und rotativ festlegt. Dadurch wird das mit dem Drehstellglied 6 gekoppelte Ventilglied 7 ohne eine an der Spule 2 angelegte elektrische Anregung in einer am weitesten aus der Öffnung 27 des Gehäuses 9 vorstehenden Position gehalten, um ein zugeordnetes Ventil stromlos zu steuern.

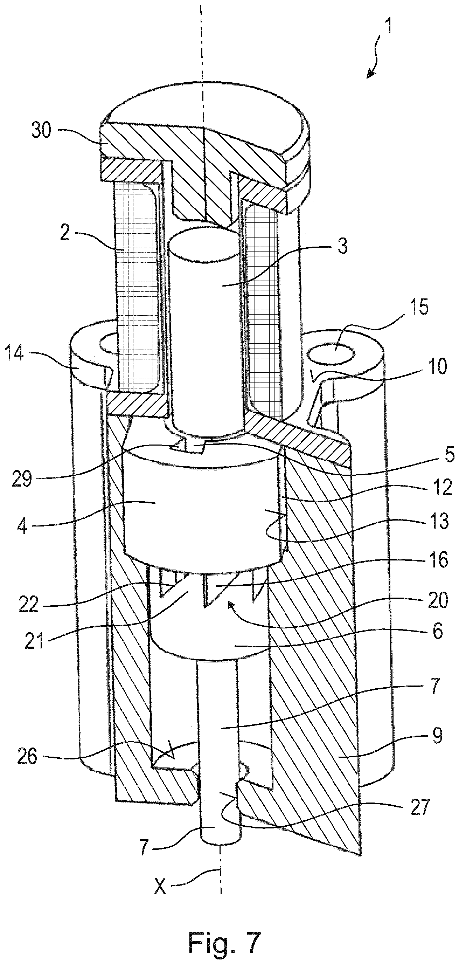

In Figur 7 ist eine weitere Ausführungsform einer erfindungsgemäßen Aktuatoreinheit 1 gezeigt. Auch hier umfasst die Aktuatoreinheit 1 eine Spule 2, insbesondere eine Solenoid-Spule, einen von der Spule 2 in einer axialen Richtung x bewegbaren Antriebskörper 3, einen Stator 4, einen Aktuator 5, der von dem Antriebskörper 3 in axialer Richtung x bewegt wird, ein Drehstellglied 6 und ein Ventilglied 7 zum Steuern eines Ventils (nicht gezeigt) auf. Der Stator 4, der Aktuator 5, das Drehstellglied 6 sowie zum Teil das Ventilglied 7 sind innerhalb eines Gehäuses 9 angeordnet und im Wesentlichen koaxial zur Längsachse des Gehäuses 9 in axialer Richtung x ausgerichtet, wobei der Aktuator 5, das Drehstellglied 6 und das Ventilglied 7 in dieser Richtung bewegbar sind. Eine zwischen dem Drehstellglied 6 und dem Boden 26 des Gehäuses 9 angeordnete Schraubenfeder 8 (nicht gezeigt) ermöglicht eine Vorspannung des Drehstellglieds 6 und des Ventilglied 7 in axialer Richtung x gegen den Stator 4.

Die hohlzylindrische Spule 2 ist wiederum an der Stirnseite 10 des Gehäuses 9 angeordnet, wobei sich der in der Spule 2 in axialer Richtung x geführte Antriebskörper 3 in das Gehäuse 9 hinein erstreckt und dort auf den innerhalb des Stators 4 in axialer Richtung x geführten Aktuator 5 wirkt. Dazu weist der Stator 4 eine Bohrung 11 auf, in der der Aktuator 5 aufgenommen ist, sowie eine an der inneren Wandung der Bohrung 11 in axialer Richtung x verlaufende Nut 29, durch die eine Drehung des Aktuators 5 um die Längsachse des Gehäuses 9 verhindert wird. Die oberseitige Öffnung der hohlzylindrischen Spule 2 ist hier mit einem Deckel 30 verschlossen, um ein Eindringen von Schmutz oder Feuchtigkeit zu verhindern. Der Stator 4 weist am Außenumfang zwei abgeflachte Seiten 12 auf, die in entsprechenden Ausnehmungen 13 innerhalb des Gehäuses 9 angeordnet sind, um den Stator 4 rotativ gegenüber dem Gehäuse 9 zu sichern.

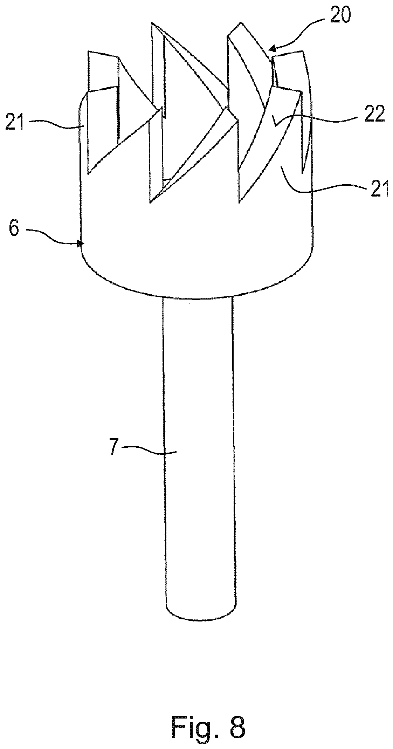

Das Drehstellglied 6 weist auf der dem Stator 4 zugewandten Oberseite eine Positionierkulisse 20 auf, die aus mindestens 2, bevorzugt mindestens 3 gleichförmigen Positionierstrukturen 21 besteht. Die gleichförmigen Positionierstrukturen 21 sind gleichmäßig am Umfang des Drehstellglieds 6 angeordnet und stehen gleichweit in Richtung des Stators 4 bzw. des Aktuators 5 vor (d.h. in axialer Richtung x), wobei die Positionierstirnseiten 22 der gleichförmigen Positionierstrukturen 21 jeweils abgeschrägt sind, wobei die Neigung der Positionierstirnseiten 22 immer in die gleiche Drehrichtung weist, siehe auch Figur 8. Das mit dem Drehstellglied 6 gekoppelte Ventilglied 7 erstreckt sich auch hier durch eine Öffnung 27 am Boden 26 des Gehäuses 9, um in einem zugehörigen Ventil (nicht gezeigt) eine der rotativen Halteposition des Drehstellglieds 6 zugeordneten Öffnungsstellung des Ventils auch bei einer stromlosen Spule 2 zu halten.

Die perspektivische Ansicht in Figur 8 zeigt im Detail das Drehstellglied 6 mit der Positionierkulisse 20 sowie das auf der Gegenseite mit dem Drehstellglied 6 gekoppelte Ventilglied 7. Die Positionierkulisse 20 besteht hier aus 8 gleichmäßig am Umfang des Drehstellglieds 6 angeordneten gleichförmigen Positionierstrukturen 21 mit abgeschrägten Positionierstirnseiten 22, wobei die Positionierstrukturen 21 entsprechend dem Umfang des Drehstellglieds 6 gebogen ausgebildet sind. In Interaktion mit dem Indexzeiger 16 des Stators 4 und dem Betätigungsmittel 18 (in Figur 7 nicht sichtbar) des Aktuators 5 bildet die Positionierkulisse 20 verschiedene stabile Haltepositionen aus, in denen die Spitze des Indexzeiger 16 zwischen der abgeschrägten Positionierstirnseite 22 und der senkrechten Flanke einer nachfolgenden Positionierstruktur 21 festgelegt ist, sodass das von der Schraubenfeder 8 vorgespannte Drehstellglied 6 und das damit gekoppelte Ventilglied 7 rotativ festgelegt sind.

Die Drehung des Drehstellglieds 6 mittels der Positionierkulisse 20 erfolgt bei angeregter Spule 2 über den in der Spule 2 geführten Antriebskörper 3 und den im Stator 4 geführten Aktuator 5 mittels der abgeschrägten Betätigungsmittelstirnseite 19 des Betätigungsmittels 18 des Aktuators 5. Der Aktuator 5 bewegt über das Betätigungsmittel 18 das Drehstellglied 6 und das daran gekoppelte Ventilglied 7 in axialer Richtung x, sodass das Ventilglied 7 weiter aus der Öffnung 27 vorsteht. Die Bewegung des Drehstellglieds 6 erfolgt zunächst ohne rotativen Anteil lediglich in axialer Richtung x, da eine zugehörige senkrechte Flanke der Positionierstruktur 21 von der abgeschrägten Betätigungsmittelstirnseite 19 gegen den festgelegten Indexzeiger 16 des Stators 4 drückt und eine Drehung des Drehstellglieds 6 verhindert. Bei einem weiteren Ausfahren des Aktuators 5 aus der Bohrung 11 des Stators 4 wird das Drehstellglied 6 nicht mehr in seiner radialen Position fixiert, da der Indexzeiger 16 und die senkrechte Flanke der zugehörigen Positionierstruktur 21 sich nicht mehr überschneiden, sodass in dieser Drehposition 28 das Drehstellglied 6 zusammen mit der Positionierkulisse 20 gegenüber dem Stator 4 und dem zugehörigen Indexzeiger 16 drehbar ist.

Beim Ausschalten der elektrischen Anregung der Spule 2 und dem damit verbundenen automatischen Zurückziehen des Antriebskörpers 3 und des Aktuators 5 trifft die abgeschrägte Positionierstirnseite 22 der nachfolgenden Positionierstruktur 21 zumindest zum Teil auf die abgeschrägte Indexzeigerstirnseite 17 und gleitet dann durch die Vorspannung der Schraubenfeder 8 an dieser entlang, bis der Indexzeiger 17 sich in einer nachfolgenden rotativen Halteposition befindet, die dann wieder durch die abgeschrägte Positionierstirnseite 22 der nachfolgenden Positionierstruktur 21 definiert ist. Dazu sind die abgeschrägten Positionierstirnseiten 22 der axial vorstehenden Positionierstrukturen 21 der Positionierkulisse 20 des Drehstellglieds 6 in Umfangsrichtung bevorzugt etwas länger ausgeführt als die abgeschrägte Betätigungsmittelstirnseite 19 des Betätigungsmittels 18 des Aktuators 5. Dies ermöglicht eine sichere Übergabe der Positionierkulisse 20 in die nachfolgende Halteposition. Der Übergang zwischen den verschiedenen rotativen Haltepositionen wird immer über eine gleichförmige axiale Bewegung des Aktuators 5 erzeugt, wobei die rotativen Halteposition, d.h. die verschiedenen Schaltstellungen des Ventilglied 7 in axialer Richtung x, immer auf derselben axialen Position des Drehstellglieds 6 bzw. des Ventilglieds 7 liegen. Entsprechend wird in dieser Ausführungsform einer erfindungsgemäßen Aktuatoreinheit 1 das zugehörige Ventil (nicht gezeigt) ausschließlich über die rotative Bewegung des Drehstellglieds 6 und des damit verbundenen Ventilglieds 7 bzw. deren rotative Haltepositionen gesteuert, d.h. in radialer Richtung zur Bewegung des Aktuators 5 in axialer Richtung x.

### Bezugszeichenliste:

- 1: Aktuatoreinheit
- 2: Spule
- 3: Antriebskörper
- 4: Stator
- 5: Aktuator
- 6: Drehstellglied
- 7: Ventilglied
- 8: Schraubenfeder
- 9: Gehäuse
- 10: Stirnseite
- 11: Bohrung
- 12: Abgeflachte Seiten
- 13: Ausnehmung
- 14: Deckel
- 15: Befestigungsöffnungen
- 16: Indexzeiger
- 17: Indexzeigerstirnseite
- 18: Betätigungsmittel
- 19: Betätigungsmittelstirnseite
- 20: Positionierkulisse
- 21: Positionierstrukturen
- 22: Positionierstirnseiten
- 23: erste Halteposition
- 24: zweite Halteposition
- 25: dritte Halteposition
- 26: Boden
- 27: Öffnung
- 28: Drehposition
- 29: Nut
- 30: Deckel

- x: axiale Richtung

## Patentansprüche

1. Aktuatoreinheit (1) zur Steuerung von Ventilen, mit einer Spule (2), einem von der Spule (2) in einer axialen Richtung (x) bewegbaren Antriebskörper (3), einem Stator (4) mit einem Indexmittel, einem Aktuator (5) mit einem Betätigungsmittel (18), wobei der Antriebskörper (3) auf den Aktuator (5) wirkt, um den Aktuator (5) in axialer Richtung (x) zu bewegen, einem Drehstellglied (6) mit einer Positionierkulisse (20) sowie einem mit dem Drehstellglied (6) gekoppelten Ventilglied (7) zum Steuern eines Ventils, wobei das Indexmittel des Stators (4) und das Betätigungsmittel (18) des Aktuators (5) in einer Wirkbeziehung mit der Positionierkulisse (20) des Drehstellglieds (6) stehen,
**dadurch gekennzeichnet, dass** der Stator (4) und der Aktuator (5) zueinander bewegbar sind, und wobei das Indexmittel des Stators (4) und das Betätigungsmittel (18) des Aktuators (5) aus der gleichen axialen Richtung (x) auf die Positionierkulisse (20) des Drehstellglieds (6) einwirken.

2. Aktuatoreinheit (1) nach Anspruch 1,
**dadurch gekennzeichnet, dass** der Stator (4) ein Führungsmittel aufweist, um den Aktuator (5) und/oder den Antriebskörper (3) in axialer Richtung (x) zu führen, bevorzugt mindestens eine in axialer Richtung (x) verlaufende Nut oder mindestens einen in axialer Richtung (x) verlaufenden Schlitz.

3. Aktuatoreinheit (1) nach Anspruch 1 oder 2,
**dadurch gekennzeichnet, dass** das Betätigungsmittel (18) des Aktuators (5) eine abgeschrägte Betätigungsmittelstirnseite (19) aufweist, die mit der Positionierkulisse (20) des Drehstellglieds (6) in Eingriff bringbar ist.

4. Aktuatoreinheit nach einem der Ansprüche 1 bis 3,
**dadurch gekennzeichnet, dass** das Indexmittel des Stators (4) mindestens ein in axialer Richtung (x) vorstehender Indexzeiger (16) ist und bevorzugt eine abgeschrägte Indexzeigerstirnseite (17) aufweist.

5. Aktuatoreinheit (1) nach Anspruch 3 oder 4,
**dadurch gekennzeichnet, dass** das Betätigungsmittel (18) des Aktuators (5) und/oder das Indexmittel des Stators (4) ausschließlich in axialer Richtung (x) vorstehen.

6. Aktuatoreinheit (1) nach einem der Ansprüche 1 bis 5,
**dadurch gekennzeichnet, dass** die Positionierkulisse (20) des Drehstellglieds (6) in Richtung des Stators (4) und des Aktuators (5) vorsteht, wobei die Positionierkulisse (20) bevorzugt ringförmig ausgebildet ist.

7. Aktuatoreinheit (1) nach Anspruch 6,
**dadurch gekennzeichnet, dass** die Positionierkulisse (20) mehrere in axialer Richtung x vorstehende Positionierstrukturen (21) aufweist, wobei die unterschiedlichen Positionierstrukturen (21) zumindest teilweise eine abgeschrägte Positionierstirnseite (22) aufweisen.

8. Aktuatoreinheit (1) nach Anspruch 7,
**dadurch gekennzeichnet, dass** mehrere Sätze von nebeneinander angeordneten unterschiedlichen Positionierstrukturen (21) vorgesehen sind, wobei die Reihenfolge der Positionierstrukturen (21) sich am Umfang des Drehstellglieds (6) wiederholt.

9. Aktuatoreinheit (1) nach einem der Ansprüche 1 bis 8,
**dadurch gekennzeichnet, dass** das Drehstellglied (6) und das Ventilglied (7) fest miteinander verbunden oder einteilig ausgebildet sind.

10. Aktuatoreinheit (1) nach einem der Ansprüche 1 bis 9,
**dadurch gekennzeichnet, dass** das Drehstellglied (6) in axialer Richtung x gegenüber dem Stator (4) vorgespannt ist, wobei bevorzugt eine Feder zum Vorspannen des Drehstellglieds (6) vorgesehen ist, die sich gegen ein Gehäuse (9) abstützt, um das Drehstellglied (6) in axialer Richtung (x) vorzuspannen.

11. Aktuatoreinheit (1) nach einem der Ansprüche 1 bis 10,
**dadurch gekennzeichnet, dass** die Spule (2) eine Solenoid-Spule ist, und dass der Antriebskörper (3) bevorzugt ein permanentmagnetischer Hubanker ist, der in axialer Richtung x zumindest zum Teil in der Spule (2) aufgenommen ist.

12. Aktuatoreinheit (1) nach einem der Ansprüche 1 bis 11,
**dadurch gekennzeichnet, dass** ein Gehäuse (9) vorgesehen ist, wobei der Stator (4), der Aktuator (5), das Drehstellglied (6) und zumindest teilweise das Ventilglied (7) in dem Gehäuse (9) aufgenommen sind.

13. Aktuatoreinheit (1) nach einem der Ansprüche 1 bis 12,
**dadurch gekennzeichnet, dass** die Aktuatoreinheit (1) eine Fahrradkomponenten-Aktuatoreinheit zur Steuerung von hydraulischen Fahrradkomponenten, beispielsweise von Federgabeln, Dämpfern oder Sattelstützen, ist.

14. Steuerverfahren für ein Ventil, insbesondere ein Hydraulikventil zur Steuerung von hydraulischen Fahrradkomponenten, beispielsweise von Federgabeln, Dämpfern oder Sattelstützen, mit einer Aktuatoreinheit (1) nach einem der Ansprüche 1 bis 13, mit den Schritten:
Beaufschlagen der Spule (2) mit Strom,
Antreiben des Antriebskörpers (3) durch die mit Strom beaufschlagte Spule (2) in axialer Richtung (x),
Bewegen des Aktuators (5) in axialer Richtung (x) mittels des Antriebskörpers (3), wodurch das Betätigungsmittel (18) des Aktuators (5) das Drehstellglied (6) über die Positionierkulisse (20) aus einer ersten stabilen Halteposition (23) in eine gegenüber dem Indexmittel Drehposition (28) überführt,
Überführen der Spule (2) in einen stromlosen Zustand,
Drehen des Drehstellglieds (6) gegenüber dem Stator (4), bevorzugt indem eine abgeschrägte Positionierstirnseite (22) einer Positionierstruktur der vorgespannten Positionierkulisse (20) des Drehstellglieds (6) an einer abgeschrägten Indexzeigerstirnseite (17) des Indexmittels entlanggleitet,
Festlegen des Drehstellglieds (6) in einer zweiten stabilen Halteposition (24) mittels des Eingriffs des Indexmittels des Stators (4) in die Positionierkulisse (20) des Drehstellglieds (6).
